# EUROPÄISCHE PATENTSCHRIFT

(11) **EP 3 419 875 B1**
(45) Veröffentlichungstag und Bekanntmachung des Hinweises auf die Patenterteilung: **08.04.2020**
(21) Anmeldenummer: 17706227.0
(22) Anmeldetag: 20.02.2017
(51) Int. Cl.: B60T 8/32, B60T 17/18

(54) **VERFAHREN ZUM BETRIEB EINER BREMSANLAGE EINES KRAFTFAHRZEUGS UND BREMSANLAGE**
METHOD FOR OPERATING A BRAKE SYSTEM OF A MOTOR VEHICLE, AND BRAKE SYSTEM
PROCÉDÉ POUR FAIRE FONCTIONNER UN SYSTÈME DE FREINAGE D'UN VÉHICULE À MOTEUR ET SYSTÈME DE FREINAGE

(30) Priorität: 26.02.2016 DE 102016203114; 19.01.2017 DE 102017200819
(43) Veröffentlichungstag der Anmeldung: 02.01.2019
(73) Patentinhaber: Continental Teves AG & Co. OHG, 60488 Frankfurt am Main (DE)
(72) Erfinder: BESIER, Marco, 65307 Bad Schwalbach (DE); ROLL, Georg, 60438 Frankfurt (DE); GRÖGER, Sascha, 65779 Kelkheim (DE); NEU, Andreas, 76773 Kuhardt (DE); HOFFMANN, Cristiano, 63477 Maintal (DE); LINHOFF, Paul, 61267 Neu-Anspach (DE)
(86) Internationale Anmeldenummer: PCT/EP2017/053736
(87) Internationale Veröffentlichungsnummer: WO 2017/144390

(56) Entgegenhaltungen:
- WO-A1-2012/143313
- WO-A1-2015/074935
- WO-A1-2016/012331
- US-A1- 2015 151 726

## Beschreibung

Die Erfindung betrifft ein Verfahren zum Betrieb einer Bremsanlage gemäß dem Oberbegriff von Anspruch 1 sowie eine Bremsanlage gemäß dem Oberbegriff von Anspruch 10.

In der DE 10 2015 212 552 A1 wird eine Bremsanlage für ein Kraftfahrzeug zur Betätigung von hydraulisch betätigbaren Radbremsen einer Vorder- und einer Hinterachse offenbart, mit einem Hauptbremssystem (Primärbremssystem) mit einem bremspedalbetätigbaren Hauptbremszylinder, einem dem Hauptbremszylinder zugeordneten Druckmittelvorratsbehälter, einer elektrisch steuerbaren Druckmodulationseinrichtung zum Einstellen radindividueller Bremsdrücke mit Einlass- und Auslassventilen und einer ersten elektrisch steuerbaren Druckbereitstellungseinrichtung, sowie mit einem Pumpen-Ventil-Modul (Sekundärbremssystem), wobei das Pumpen-Ventil-Modul hydraulisch zwischen das Hauptbremssystem und die Radbremsen von Vorder- und Hinterachse geschaltet ist. Das Hauptbremssystem übernimmt den Systemdruckaufbau an den Radbremsen in einem normalen Bremsbetrieb und das Pumpen-Ventil-Modul ist für den Fall vorgesehen, dass die Systemdruckbereitstellungsfunktion des Hauptbremssystems ausgefallen ist. In dieser Situation übernimmt das Pumpen-Ventil-Modul den Druckaufbau an den Radbremsen. Die DE 10 2015 212 552 A1 offenbart nichts Genaueres darüber, wie ein Ausfall der Systemdruckbereitstellungsfunktion des Hauptbremssystems erkannt wird.

Weitere Bremssysteme mit den Merkmalen der Oberbegriffe der unabhängigen Ansprüche sind aus der WO2016/012331A1 und WO2012/143313A1 bekannt.

Es ist Aufgabe der vorliegenden Erfindung, ein Verfahren zum Betrieb einer Bremsanlage eines Kraftfahrzeugs mit einem Primärbremssystem und einem nachgeschalteten Sekundärbremssystem sowie eine derartige Bremsanlage bereitzustellen, mit welchem ein Ausfall des Primärbremssystems schnell und sicher erkannt werden kann, so dass das Sekundärbremssystem eine Bremsungsfunktion übernehmen kann.

Die Aufgabe wird erfindungsgemäß durch ein Verfahren gemäß Anspruch 1 und eine Bremsanlage gemäß Anspruch 10 gelöst.

Unter "zumindest einem Teil der hydraulisch betätigbaren Radbremsen" wird erfindungsgemäß eine Untermenge der hydraulisch betätigbaren Radbremsen, z.B. zwei von vier Radbremsen, oder auch alle hydraulisch betätigbaren Radbremsen, z.B. vier von vier Radbremsen, verstanden. Entsprechend kann "der Teil der Radbremsen" eine Untermenge von Radbremsen oder alle Radbremsen umfassen.

Die Erfindung beruht auf dem Gedanken, dass das Sekundärbremssystem das Primärbremssystem anhand der Signale der zweiten Druckerfassungseinrichtung des Sekundärbremssystems und einer vorgegebenen Bremsdruckanforderung bezüglich der Funktionsfähigkeit des Primärbremssystems zum Aufbau eines Bremsdruckes entsprechend der vorgegebenen Bremsdruckanforderung überwacht. Das bedeutet mit etwas anderen Worten, dass in der zweiten elektronischen Steuer- und Regeleinheit des Sekundärbremssystems eine Überwachung des Primärbremssystem bezüglich der Funktionsfähigkeit des Primärbremssystems zum Aufbau eines Bremsdruckes entsprechend einer vorgegebenen Bremsdruckanforderung durchgeführt wird, wobei die Überwachung anhand der Signale der zweiten Druckerfassungseinrichtung und der vorgegebenen Bremsdruckanforderung durchgeführt wird.

Die Überwachung des Primärbremssystems wird durch das Sekundärbremssystem und anhand der Signale der zweiten Druckerfassungseinrichtung und der Bremsdruckanforderung durchgeführt, auch wenn das Primärbremssystem eine erste Druckerfassungseinrichtung umfasst, welche den von dem Primärbremssystem bereitgestellten Bremsdruck misst. Die Signale der ersten Druckerfassungseinrichtung werden in der ersten elektronischen Steuer- und Regeleinheit des Primärbremssystems verarbeitet. Grundsätzlich wäre denkbar, dass das Primärbremssystem mittels der ersten Druckerfassungseinrichtung selbst diagnostiziert, ob es die Bremsdruckanforderung umsetzen kann, und ggf. die selbst erkannte Fehlfunktion an das Sekundärbremssystem meldet. Alternativ wäre denkbar, die Signale der ersten Druckerfassungseinrichtung zusätzlich (insbeosndere über getrennte Signalleitungen) dem Sekundärbremssystem (insbesondere der zweiten elektronischen Steuer- und Regeleinheit) zuzuführen, so dass die Überwachung des Primärbremssystems durch das Sekundärbremssystem anhand der Signale der ersten Druckerfassungseinrichtung durchgeführt werden könnte. Erfindungsgemäß wird jedoch die Überwachung des Primärbremssystems durch das Sekundärbremssystem und anhand der Signale der zweiten Druckerfassungseinrichtung und der Bremsdruckanforderung durchgeführt.

Die Erfindung ermöglicht eine sichere Bremsung des Kraftfahrzeugs, auch bei Ausfall des Primärbremssystems.

Die Erfindung bietet den Vorteil einer erhöhten Sicherheit der Bremsanlage.

Die Erfindung bietet weiterhin den Vorteil einer verbesserten Bremsanlage für automatisiertes Fahren.

Bevorzugt überwacht das Sekundärbremssystem im speziellen die erste Druckbereitstellungseinrichtung des Primärbremssystems.

Bevorzugt misst die erste Druckerfassungseinrichtung den von der ersten Druckbereitstellungseinrichtung bereitgestellten Bremsdruck.

Bevorzugt werden zur Überwachung des Primärbremssystems die Signale der zweiten Druckerfassungseinrichtung mit der vorgegebenen Bremsdruckanforderung verglichen.

Die Bremsdruckanforderung wird bevorzugt der ersten elektronischen Steuer- und Regeleinheit des Primärbremssystems und der zweiten elektronischen Steuer- und Regeleinheit des Sekundärbremssystems zugeführt bzw. liegt diesen vor. So liegt auch im fehlerfreien Normalbetrieb der Bremsanlage beiden elektronischen Steuer- und Regeleinheiten die umzusetzende Bremsdruckanforderung vor, was zur Erhöhung der Betriebssicherheit und Verfügbarkeit der Bremsanlage besonders für das hochautomatisierte Fahren notwendig ist.

Gemäß einer Weiterbildung der Erfindung wird die Bremsdruckanforderung von einem Steuergerät vorgegeben. Für Bremsanlagen zum hochautomatisierten Fahren ist dies bevorzugt das Steuergerät mit einer Autopilotfunktion.

Bevorzugt ist das Steuergerät mit der zweiten elektronischen Steuer- und Regeleinheit über eine zweite Signalverbindung und mit der ersten elektronischen Steuer- und Regeleinheit über eine erste Signalverbindung verbunden. Die Signalverbindung ist besonders bevorzugt jeweils ein Datenbus. So liegt beiden elektronischen Steuer- und Regeleinheiten die umzusetzende Bremsdruckanforderung vor.

Gemäß einer Weiterbildung der Erfindung wird der zweiten elektronischen Steuer- und Regeleinheit des Sekundärbremssystems von der ersten elektronischen Steuer- und Regeleinheit des Primärbremssystems ein Signal übermittelt, ob eine Bremsdruckregelfunktion im Primärbremssystem aktiv ist oder nicht. Dies kann dann von dem Sekundärbremssystem bei der Überwachung des Primärbremssystems, insbesondere dem Vergleich des gemessenen Druckwertes der zweiten Druckerfassungseinrichtung mit der vorgegebenen Bremsdruckanforderung, berücksichtigt werden. Besonders bevorzugt wird dem Sekundärbremssystem die Information übermittelt, ob eine Bremsdruckregelfunktion im Primärbremssystem aktiv ist oder nicht, welche eine Unterschreitung der vorgegebenen Bremsdruckanforderung erlaubt. In diesem Fall wäre es erwünscht bzw. beabsichtigt, dass der von der zweiten Druckerfassungseinrichtung gemessene Druckwert unterhalb der Bremsdruckanforderung liegt. Der von der zweiten Druckerfassungseinrichtung gemessene Druckwert entspricht einem Ausgangsdruck des Primärbremssystems, welcher bei einer Bremsdruckregelfunktion durchaus niedriger als der, z.B. vom Fahrer oder der Autopilotfunktion, angeforderte Systembremsdruck sein kann. Ganz besonders bevorzugt wird dem Sekundärbremssystem die Information übermittelt, ob eine Antiblockierregelung oder eine (Antriebs)Schlupfregelung oder eine Fahrdynamikregelung im Primärbremssystem aktiv ist oder nicht.

Bevorzugt wird eine Betätigung des Teils der Radbremsen mittels der zweiten Druckbereitstellungseinrichtung des Sekundärbremssystems durchgeführt, wenn das Primärbremssystem bzw. die erste Druckbereitstellungseinrichtung über einen vorgegebenen Zeitraum keinen Bremsdruck entsprechend der vorgegebenen Bremsdruckanforderung bereitstellt. So wird eine höhere Sicherheit erreicht. Besonders bevorzugt wird ein Fehlerzähler inkrementiert, solange die Signale der zweiten Druckerfassungseinrichtung nicht der vorgegebenen Bremsdruckanforderung entsprechen, und das Sekundärbremssystem übernimmt die Bremsfunktion der Bremsanlage zumindest für den Teil der Radbremsen, wenn der Stand des Fehlerzählers einen vorgegebene Grenzwert überschreitet.

Bevorzugt erfasst die zweite Druckerfassungseinrichtung einen Eingangsdruck des Sekundärbremssystems. Da das Sekundärbremssystem dem Primärbremssystem nachgeschaltet ist, wird so direkt ein Ausgangsdruck, insbesondere ein Radbremsdruck, des Primärbremssystems erfasst. Wenn keine Bremsdruckregelfunktion im Primärbremssystem aktiv ist und das Primärbremssystem funktionsfähig ist, entspricht der gemessene Druck dem von der ersten Druckbereitstellungseinrichtung bereitgestellten Druck.

Alternativ ist es bevorzugt, dass die zweite Druckerfassungseinrichtung einen Ausgangsdruck des Sekundärbremssystems, besonders bevorzugt einen Radbremsdruck oder Druck an einer der Radbremsen, erfasst. Abgesehen von eventuellen Drosselwirkungen von hydraulischen Komponenten, z.B. einem Ventil, in der hydraulischen Verbindung zwischen Eingangsdruckanschluss des Sekundärbremssystems und Ausgangsdruckanschluss des Sekundärbremssystems, entspricht der gemessene Druck einem Ausgangsdruck des Primärbremssystems.

Das Sekundärbremssystem kann auch mehrere zweite Druckerfassungseinrichtungen umfassen, wobei eine dieser Druckerfassungseinrichtungen einen Eingangsdruck des Sekundärbremssystems und eine andere dieser Druckerfassungseinrichtungen einen Ausgangsdruck des Sekundärbremssystems erfasst. Zur Überwachung können dann die Signale von einer oder mehreren der zweiten Druckerfassungseinrichtungen herangezogen werden.

Die Erfindung betrifft auch eine Bremsanlage, in welcher ein erfindungsgemäßes Verfahren durchgeführt wird.

Bevorzugt sind die hydraulischen Komponenten des Primärbremssystems als eine erste selbständige Baugruppe ausgeführt, wobei der ersten Baugruppe die erste elektronische Steuer- und Regeleinheit zugeordnet ist, und die hydraulischen Komponenten des Sekundärbremssystems als eine zweite selbständige Baugruppe ausgeführt, wobei der zweiten Baugruppe die zweite elektronische Steuer- und Regeleinheit zugeordnet ist. Diese ermöglicht leicht prüfbare und austauschbare Untersysteme. Besonders bevorzugt ist die erste elektronische Steuer- und Regeleinheit an der ersten Baugruppe angeordnet und die zweite elektronische Steuer- und Regeleinheit an der zweiten Baugruppe angeordnet.

Bevorzugt umfasst das Primärbremssystem einen bremspedalbetätigbaren Hauptbremszylinder, welcher mit hydraulisch betätigbaren Radbremsen einer Vorderachse und mit hydraulisch betätigbaren Radbremsen einer Hinterachse verbunden ist, wobei die erste elektrisch steuerbaren Druckbereitstellungseinrichtung mit den Radbremsen der Vorderachse und mit den Radbremsen der Hinterachse verbunden ist.

Bevorzugt umfasst das Primärbremssystem einen dem Hauptbremszylinder zugeordneten unter Atmosphärendruck stehenden Druckmittelvorratsbehälter.

Bevorzugt umfasst das Primärbremssystem eine elektrisch steuerbare Druckmodulationseinrichtung zum Einstellen radindividueller Bremsdrücke mit zumindest einem Einlassventil, und insbesondere einem Auslassventil, für jede Radbremse.

Bevorzugt umfasst das Sekundärbremssystem eine Pumpen-Ventil-Anordnung, welche hydraulisch zwischen dem Primärbremssystem und den Radbremsen der Vorderachse angeordnet ist.

Besonders bevorzugt ist die Pumpen-Ventil-Anordnung hydraulisch zwischen den Einlassventilen der Radbremsen der Vorderachse des Primärbremssystems und den Radbremsen der Vorderachse angeordnet.

Die Pumpen-Ventil-Anordnung umfasst bevorzugt je Radbremse der Vorderachse ein erstes, insbesondere stromlos offen ausgeführtes, insbesondere analog ansteuerbares, zwischen Primärbremssystem und Radbremse angeordnetes Ventil.

Die Pumpen-Ventil-Anordnung umfasst bevorzugt je Radbremse der Vorderachse ein dem ersten Ventil parallel geschaltetes, in Richtung der Radbremse öffnendes Rückschlagventil.

Die Pumpen-Ventil-Anordnung umfasst bevorzugt je Radbremse eine elektrisch ansteuerbare Pumpe mit einem Sauganschluss und einem Druckanschluss, wobei der Druckanschluss mit der Radbremse, insbesondere direkt, verbunden ist. Die Pumpen der Pumpen-Ventil-Anordnung stellen somit die zweite Druckbereitstellungseinrichtung dar.

Bevorzugt ist je Pumpe der Sauganschluss über ein drittes, insbesondere stromlos geschlossen ausgeführtes, Ventil mit einer Druckmittelvorratskammer der Pumpen-Ventil-Anordnung oder einem Druckmittelvorratsbehälter verbunden.

Die Pumpen-Ventil-Anordnung umfasst bevorzugt je Radbremse der Vorderachse ein die Radbremse mit der Druckmittelvorratskammer oder dem Druckmittelvorratsbehälter verbindendes zweites, insbesondere stromlos geschlossen ausgeführtes, Abbau-Ventil.

Jeder Eingangsdruckanschluss der Pumpen-Ventil-Anordnung ist bevorzugt mit einem Einlassventil der Druckmodulationseinrichtung verbunden, und jeder Ausgangsdruckanschluss der Pumpen-Ventil-Anordnung ist, insbesondere ohne Zwischenschaltung eines Ventils, mit einer der Radbremsen der Vorderachse verbunden.

Bevorzugt ist das Primärbremssystem bzw. die erste elektrisch steuerbaren Druckbereitstellungseinrichtung zur Betätigung der hydraulisch betätigbarer Radbremsen in einer Normalbetriebsart vorgesehen.

Das Sekundärbremssystem bzw. die zweite elektrisch steuerbare Druckbereitstellungseinrichtung ist zur Betätigung zumindest eines Teils der hydraulisch betätigbarer Radbremsen ausgebildet. Besonders bevorzugt ist das Sekundärbremssystem bzw. die zweite elektrisch steuerbaren Druckbereitstellungseinrichtung zur Betätigung der Radbremsen einer Vorderachse des Kraftfahrzeugs ausgebildet.

Bevorzugt ist das Sekundärbremssystem bzw. die zweite elektrisch steuerbaren Druckbereitstellungseinrichtung zur Betätigung des Teils der hydraulisch betätigbarer Radbremsen in einer zweiten Betriebsart, insbesondere einer elektrisch gesteuerten Rückfallbetriebsart, vorgesehen.

Besonders bevorzugt dient die erste elektronischen Steuer- und Regeleinheit zur Ansteuerung der ersten Druckbereitstellungseinrichtung bzw. des Primärbremssystems.

Bevorzugt dient die zweite elektronische Steuer- und Regeleinheit zur Ansteuerung der zweiten Druckbereitstellungseinrichtung bzw. des Sekundärbremssystems.

Weitere bevorzugte Ausführungsformen der Erfindung ergeben sich aus den Ansprüchen und der nachfolgenden Beschreibung anhand von Figuren.

Es zeigen schematisch:
- Fig. 1: eine Bremsanlage gemäß einem ersten Ausführungsbeispiel zur Durchführung eines erfindungsgemäßen Verfahrens,
- Fig. 2: eine Bremsanlage gemäß einem zweiten Ausführungsbeispiel zur Durchführung eines erfindungsgemäßen Verfahrens, und
- Fig. 3: zeitliche Verläufe verschiedener Größen während eines beispielsgemäßen Verfahrens.

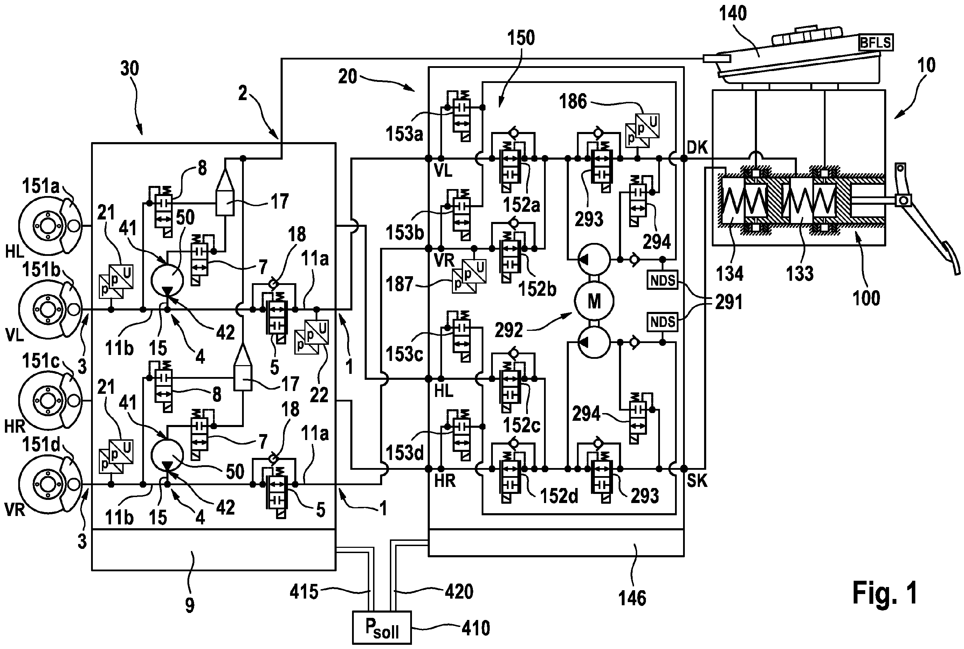

In Fig. 1 ist eine erste beispielsgemäße Bremsanlage eines Kraftfahrzeugs zur Durchführung eines erfindungsgemäßen Verfahrens stark schematisch dargestellt. Die Bremsanlage umfasst ein Primärbremssystem für Betriebsbremsungen 10, 20 (Hauptbremssystem) und ein Sekundärbremssystem für Betriebsbremsungen 30 (beispielsgemäß ausgeführt als elektrisch steuerbare Pumpen-Ventil-Anordnung oder Pumpen-Ventil-Modul oder Backup-Modul) .

Das Primärbremssystem umfasst im Wesentlichen eine Bremsbetätigung 10 mit Hauptbremszylinder 100 und ein konventionelles ESC-Modul 20 mit einer ersten elektrisch steuerbaren Druckbereitstellungseinrichtung 292, dem eine erste elektronische Steuer- und Regeleinheit 146 zugeordnet ist.

Die Bremsbetätigung 10 umfasst beispielsgemäß einen bremspedalbetätigbaren Hauptbremszylinder 100 mit Druckräumen 133 und 134, wobei jedem Druckraum 133 bzw. 134 die Radbremsen einer Achse 151b, 151d (Vorderachse VA) bzw. 151a, 151c (Hinterachse HA) zugeordnet sind, und einen dem Hauptbremszylinder zugeordneten unter Atmosphärendruck stehenden Druckmittelvorratsbehälter 140. Die Radbremse 151b ist dem linken Vorderrad VL und die Radbremse 151d dem rechten Vorderrad VR zugeordnet, und die Radbremsen 151b, 151d sind dem Bremskreis I des ersten Hauptbremszylinder-Druckraums 133 zugeordnet. Die Radbremse 151a ist dem linken Hinterrad HL und die Radbremse 151c dem rechten Hinterrad HR zugeordnet, und die Radbremsen 151a, 151c sind dem Bremskreis II des zweiten Hauptbremszylinder-Druckraums 134 zugeordnet.

ESC-Modul 20 umfasst ein zweikreisiges Motor-Pumpen-Aggregat 292, je Bremskreis I, II einen Niederdruckspeicher 291 und zwei elektrisch steuerbare Ventile 293, 294 sowie eine elektrisch steuerbare Druckmodulationseinrichtung 150 mit einem Einlassventil 152a-152d und einem Auslassventil 153a-153d für jede Radbremse zum Einstellen radindividueller Bremsdrücke für die Radbremsen 151a-151d.

Dem Sekundärbremssystem bzw. Pumpen-Ventil-Anordnung 30 ist eine zweite elektronische Steuer- und Regeleinheit (ECU) 9 zugeordnet.

Sekundärbremssystem 30 ist hydraulisch zwischen dem ESC-Modul 20 und den Radbremsen 151b, 151d der Vorderachse angeordnet. D.h. Sekundärbremssystem bzw. Pumpen-Ventil-Anordnung 30 ist hinter den entsprechenden Einlassventilen 152a, 152b der Vorderradbremsen 151b, 151d angeordnet.

Die radindividuellen Ausgangsanschlüsse des Primärbremssystems sind mit den hydraulisch betätigbaren Radbremsen 151a-151d der Vorder- und Hinterachse verbunden, wobei die Einlassventile 152c, 152d der Hinterradbremsen direkt mit den Hinterradbremsen 151a, 151c verbunden sind, und die Einlassventile 152a, 152b der Vorderradbremsen über das Sekundärbremssystem 30 mit den Vorderradbremsen 151b, 151d verbunden sind.

Das Sekundärbremssystem bzw. die Pumpen-Ventil-Anordnung 30 ist beispielsgemäß zweikreisig ausgelegt. Je Kreis umfasst das Sekundärbremssystem einen ersten Anschluss 1 (Eingangsdruckanschluss, Druckeingang) zur Verbindung mit dem Primärbremssystem und einen dritten Anschluss 3 (Ausgangsdruckanschluss, Druckabgang) zur Verbindung mit der entsprechenden Vorderradbremse 151b, 151d. Anordnung 30 umfasst einen (einzigen) zweiten Anschluss 2 (Behälteranschluss) zur Verbindung mit dem Druckmittelvorratsbehälter 140. Je Kreis bzw. je Radbremse umfasst das Sekundärbremssystem 30 eine Pumpe 50 mit einer Saugseite 41 und einer Druckseite 42.

Das beispielgemäße zweikreisige Sekundärbremssystem 30 umfasst also eine zweite elektrisch steuerbare Druckbereitstellungseinrichtung bzw. Pumpenanordnung 4 mit zwei Pumpen 50, d.h. eine einzelne Pumpe 50 je Kreis. Die zwei Pumpen 50 der Pumpenanordnung 4 werden von einem Elektromotor M gemeinsam angetrieben. Jede Pumpe 50 umfasst eine Saugseite 41 und eine Druckseite 42. Um Folgenden wird einer der Kreise der Anordnung beschrieben, der andere Kreis ist entsprechend aufgebaut.

Je Kreis umfasst Sekundärbremssystem 30 ein zwischen Eingangsdruckanschluss 1 und Ausgangsdruckanschluss 3 angeordnetes, elektrisch betätigbares (erstes) Ventil 5. Ventil 5 ist beispielsgemäß stromlos offen und analog ansteuerbar ausgeführt.

Das (erste) Ventil 5 ist in einer hydraulischen Verbindung 11 zwischen dem Eingangsdruckanschluss 1 und dem Ausgangsdruckanschluss 3 mit einem (Eingangsdruckanschluss-seitigen) Leitungsabschnitt 11a und einem (Ausgangsdruckanschluss-seitigen) Leitungsabschnitt 11b angeordnet. Dem Ventil 5 ist ein in Richtung des Ausgangsdruckanschlusses 3 öffnendes Rückschlagventil 18 parallel geschaltet.

Die Druckseite 42 der Pumpe 50 ist über einen Leitungsabschnitt 15 mit dem zugehörigen Leitungsabschnitt 11b und somit dem zugehörigen Ausgangsdruckanschluss 3 verbunden. Leitungsabschnitt 11b ist weiterhin über ein stromlos geschlossenes Abbau-Ventil 8 mit einer Bremsflüssigkeits-Vorratskammer 17, welche in der Anordnung 30 angeordnet ist, verbunden.

Die Saugseite 41 der Pumpe 50 ist über einen Leitungsabschnitt, in welchem ein stromlos geschlossenes Ventil 7 angeordnet ist, mit der Bremsflüssigkeits-Vorratskammer 17 verbunden.

Bremsflüssigkeits-Vorratskammer 17 ist über eine Nachlaufleitung mit dem zweiten Anschluss 2 (Behälteranschluss) verbunden.

Beispielsgemäß sind die Nachlaufleitungen der Bremsflüssigkeits-Vorratskammern 17 zusammengeschaltet und gemeinsam mit dem Behälteranschluss 2 verbunden.

Gemäß dem Ausführungsbeispiel umfasst das Sekundärbremssystem 30 eine (einzige) Druckerfassungseinrichtung (Drucksensor) 22, welche den Druck an einem der Eingangsdruckanschlüsse 1 erfasst. Bevorzugt wird der Druck am Eingangsdruckanschluss 1 des Bremskreises I erfasst.

Gemäß dem Ausführungsbeispiel umfasst das Sekundärbremssystem 30 je Kreis bzw. je Radbremse eine Druckerfassungseinrichtung (Drucksensor) 21, welche den Druck an dem Ausgangsdruckanschluss 3, d.h. den jeweiligen Radbremsdruck erfasst.

Die zweite elektronischen Steuer- und Regeleinheit 9 ist zur Ansteuerung der zweiten Druckbereitstellungseinrichtung bzw. Pumpenanordnung 4 und der Ventile 5, 7, 8 ausgebildet. Die Signale der Druckerfassungseinrichtungen 22, 21 werden der Steuer- und Regeleinheit 9 zugeführt.

Die Bremsanlage ist mit einem Steuergerät 410 mit einer Autopilotfunktion verbunden, welches zum Betrieb der Bremsanlage eine Bremsdruckanforderung Psoll, beispielsgemäß einen Solldruck, ermittelt. Steuergerät 410 ist mit der zweiten elektronischen Steuer- und Regeleinheit 9 über eine Signalverbindung 415, z.B. einen Datenbus, verbunden. Weiterhin ist Steuergerät 420 mit der ersten elektronischen Steuer- und Regeleinheit 146 über eine Signalverbindung 420, z.B. einen Datenbus, verbunden. Die Bremsdruckanforderung Psoll wird von dem Steuergerät 410 über die Signalverbindungen 415, 420 den elektronischen Steuer- und Regeleinheiten 9, 146 des Primär- und des Sekundärbremssystems bereitgestellt.

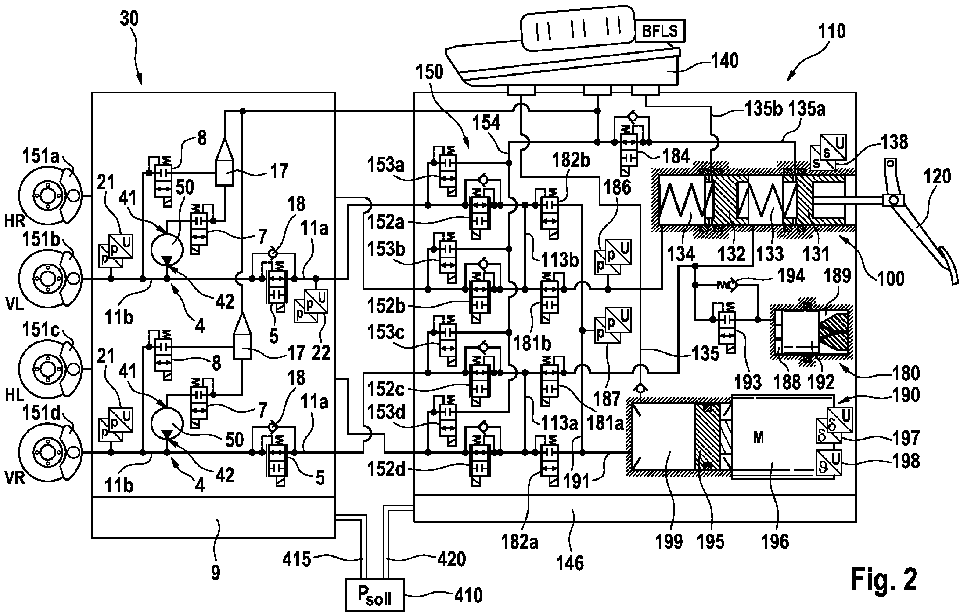

In Fig. 2 ist eine zweite beispielsgemäße Bremsanlage eines Kraftfahrzeugs zur Durchführung eines erfindungsgemäßen Verfahrens stark schematisch dargestellt. Die Bremsanlage umfasst ein Primärbremssystem für Betriebsbremsungen 110 (Hauptbremssystem) und ein Sekundärbremssystem für Betriebsbremsungen 30 (elektrisch steuerbare Pumpen-Ventil-Anordnung), welches wie das Sekundärbremssystem der Fig. 1 aufgebaut ist.

Primärbremssystem 110 stellt eine Simulator-Bremsanlage dar mit im Wesentlichen einem Hauptbremszylinder 100, welcher durch ein Bremspedal über eine Druckstange direkt betätigbar ist, einem dem Hauptbremszylinder 100 zugeordneten unter Atmosphärendruck stehenden Druckmittelvorratsbehälter 140, einer mit dem Hauptbremszylinder 100 zusammenwirkenden (Weg)Simulationseinrichtung 180, einer ersten elektrisch steuerbaren Druckbereitstellungseinrichtung 190, einer elektrisch steuerbaren Druckmodulationseinrichtung 150 zum Einstellen radindividueller Bremsdrücke für die Radbremsen 151a-151d und einer ersten elektronischen Steuer- und Regeleinheit (ECU) 146, welche zur Ansteuerung der Druckbereitstellungseinrichtung 190 und der Druckmodulationseinrichtung 150 ausgebildet ist.

Der zweikreisige Hauptbremszylinder 100 umfasst zwei hintereinander angeordnete Kolben 131, 132, die zwei hydraulische Druckräume 133, 134 begrenzen. Der erste Kolben 131 ist mechanisch mit dem Bremspedal gekoppelt und wird direkt vom Fahrzeugführer, ohne Zwischenschaltung eines Bremskraftverstärkers betätigt. Den Druckräumen 133, 134 sind Druckausgleichsleitungen 135a, 135b zum Druckmittelvorratsbehälter 140 zugeordnet. In der Druckausgleichsleitung 135a ist ein stromlos offenes (SO-) Diagnoseventil 184 enthalten.

Zur Erfassung einer Betätigung des Hauptbremszylinders 100 ist ein, vorteilhafterweise redundant ausgeführter, Wegsensor 138 vorgesehen, der z.B. eine Verschiebung des Kolben 131 und/oder 132 erfasst.

Drucksensor 186 erfasst den im Druckraum 134 durch ein Verschieben des zweiten Kolbens 132 aufgebauten Druck.

Druckmodulationseinrichtung 150 umfasst radindividuelle Einlassventile 152a-152d und Auslassventile 153a-153d. Die Eingangsanschlüsse der Einlassventile 152a-152d werden mittels Bremskreisversorgungsleitungen 113a, 113b mit Drücken versorgt, die in einer ersten Betriebsart (z.B. "Brake-by-Wire") aus einem Systemdruck abgeleitet werden, der in einer an die ersten Druckbereitstellungseinrichtung 190 angeschlossenen Systemdruckleitung 191 vorliegt. Die hydraulische Verbindung zwischen der Systemdruckleitung 191 und der Bremskreisversorgungsleitung 113a, 113b ist mittels eines, vorteilhafterweise stromlos geschlossenen, Zuschaltventils 182a, 182b je Bremskreis trennbar. In einer zweiten Betriebsart (hydraulische Rückfallbetriebsart) sind die Bremskreisversorgungsleitungen 113a, 113b über ein, vorteilhafterweise stromlos offenes, Trennventil 181a, 181b je Bremskreis mit dem zugeordneten Hauptbremszylinder-Druckraum 133, 134 verbunden. Die Ausgangsanschlüsse der Auslassventile 153a-153d sind über eine gemeinsame Rücklaufleitung 154 mit dem Druckmittelvorratsbehälter 140 verbunden.

Beispielsgemäß sind die Radbremsen 151c und 151d dem linken Hinterrad HL und dem rechten Vorderrad VR und der Bremskreisversorgungsleitung 113a sowie die Radbremsen 151a und 151b dem rechten Hinterrad HR und dem linken Vorderrad VL und der Bremskreisversorgungsleitung 113a zugeordnet. Andere Bremskreisaufteilungen sind denkbar.

Simulationseinrichtung 180 ist hydraulisch an den Hauptbremszylinder 100 ankoppelbar und besteht im Wesentlichen aus einer Simulatorkammer 188, einer Simulatorfederkammer 189 sowie einem die beiden Kammern voneinander trennenden Simulatorkolben 192. Simulatorkolben 192 stützt sich durch ein in Simulatorfederkammer 188 angeordnetes elastisches Element (z.B. eine Feder), welches vorteilhafterweise vorgespannt ist, am Gehäuse ab. Die Simulatorkammer 188 ist mittels eines elektrisch betätigbaren Simulatorfreigabeventils 193 mit dem Druckraum 133 des Hauptbremszylinders 100 verbindbar. Bei Vorgabe einer Pedalkraft und aktiviertem Simulatorfreigabeventil 193 strömt Druckmittel vom Hauptbremszylinderdruckraum 133 in die Simulatorkammer 188. Ein hydraulisch antiparallel zum Simulatorfreigabeventil 193 angeordnetes Rückschlagventil 194 ermöglicht unabhängig vom Schaltzustand des Simulatorfreigabeventils 193 ein weitgehend ungehindertes Zurückströmen des Druckmittels von der Simulatorkammer 188 zum Hauptbremszylinderdruckraum 133.

Die elektrisch steuerbare Druckbereitstellungseinrichtung 190 ist als eine hydraulische Zylinder-Kolben-Anordnung bzw. ein einkreisiger elektrohydraulischer Aktuator ausgebildet, dessen Kolben 195 von einem schematisch angedeuteten Elektromotor 196 unter Zwischenschaltung eines ebenfalls schematisch dargestellten Rotations-Translationsgetriebes betätigbar ist. Ein der Erfassung der Rotorlage des Elektromotors 196 dienender, lediglich schematisch angedeuteter Rotorlagensensor ist mit dem Bezugszeichen 197 bezeichnet. Zusätzlich kann auch ein Temperatursensor 198 zum Erfassen der Temperatur der Motorwicklung verwendet werden. Der Kolben 195 begrenzt einen Druckraum 199, welcher mit der Systemdruckleitung 191 verbunden ist. Ein Nachsaugen von Druckmittel in den Druckraum 199 ist durch ein Zurückfahren des Kolbens 195 bei geschlossenen Zuschaltventilen 182a, 182b möglich, indem Druckmittel aus dem Behälter 140 über eine Nachsaugleitung 135c mit einem in Strömungsrichtung zum Aktuator 190 öffnenden, nicht näher bezeichneten Rückschlagventil in den Akuatordruckraum 199 strömen kann.

Zum Erfassen des von der ersten Druckbereitstellungseinrichtung 190 bereitgestellten und in der Systemdruckleitung 191 herrschenden Druckes ist ein vorzugsweise redundant ausgeführter Drucksensor 187 vorgesehen.

Auch hier ist das Sekundärbremssystem 30 hydraulisch zwischen dem Primärbremssystem 110, genauer der Druckmodulationseinrichtung 150, und den Radbremsen der Vorderachse, d.h. der Radbremse 151b des linken Vorderrades VL und der Radbremse 151d des rechten Vorderrades VR, angeordnet. D.h. Sekundärbremssystem 30 ist hinter den entsprechenden Einlassventilen 152a, 152c angeordnet.

Die radindividuellen Ausgangsanschlüsse des Primärbremssystems 110 sind mit den hydraulisch betätigbaren Radbremsen 151a-151d der Vorder- und Hinterachse verbunden, wobei die Einlassventile 152b, 152d der Hinterradbremsen direkt mit den Hinterradbremsen 151a, 151c verbunden sind, und die Einlassventile 152a, 152c der Vorderradbremsen über das Sekundärbremssystem 30 mit den Vorderradbremsen 151b, 151d verbunden sind.

Die hydraulischen Komponenten der Bremsanlage sind beispielsgemäß in zwei hydraulischen Einheiten (Modulen) angeordnet. Jeder hydraulischen Einheit ist eine elektronische Steuer- und Regeleinheit 146, 9 zugeordnet.

Wie im ersten Ausführungsbeispiel der Fig. 1 ist die Bremsanlage mit einem Steuergerät 410 mit einer Autopilotfunktion verbunden, welches eine Bremsdruckanforderung Psoll ermittelt und welches mit der ersten und der zweiten elektronischen Steuer- und Regeleinheit 16, 9 wie im ersten Ausführungsbeispiel verbunden ist.

Bevorzugt wird bei dem ersten und dem zweiten Ausführungsbeispiel jede der elektronischen Steuer- und Regeleinheiten 146, 9 von einer eigenen elektrischen Energieversorgung versorgt (nicht dargestellt).

Das beispielsgemäße Sekundärbremssystem 30 kann jedem beliebigen hydraulischen (Haupt)Bremssystem nachgeschaltet werden. Beispielsweise kann es, wie in Fig. 1 dargestellt, einem konventionellen Bremssystem umfassend eine Betätigung 10 und ein Standard-ESC 20 nachgeschaltet werden. Außerdem kann es, wie beispielsweise in Fig. 2 dargestellt, einem Simulator-Bremssystem 110 nachgeschaltet werden.

In elektrisch verstärkten Bremsanlagen ist darauf zu achten, dass eine ausreichende Verfügbarkeit gegeben ist. Eine hohe Verfügbarkeit wird bevorzugt dadurch erreicht, dass die Bremsanlage aus mindestens zwei voneinander unabhängigen elektrischen Energiequellen versorgt wird. Weiterhin werden bevorzugt die durch mögliche Ausfälle gefährdeten Komponenten wie elektronische Steuer- und Regeleinheiten (ECU: elektronische Steuer- und Regeleinheit) und Aktuatoren (insbesondere elektrisch steuerbare Druckbereitstellungseinrichtungen) mehrfach ausgeführt.

Im Folgenden wird ein beispielsgemäßes Verfahren zum Betrieb der beispielsgemäßen Bremsanlagen der Fig. 1 und 2 beschrieben.

Bevorzugt übernimmt das Primärbremssystem 10, 20; 110 den Systemdruckaufbau in einem normalen Bremsbetrieb und das Sekundärbremssystem 30 ist für den Fall vorgesehen, dass die Systemdruckbereitstellungsfunktion des Primärbremssystems 10, 20; 110 ausgefallen ist. In dieser Situation übernimmt das Sekundärbremssystem den Druckaufbau.

Das Sekundärbremssystem kann sowohl eine Fahrerbremsung hydraulisch verstärken als auch einen fahrerunabhängigen Druck aufbauen.

Das Sekundärbremssystem (z.B. Pumpen-Ventil-Modul) 30 wird als Ergänzung zu dem Primärbremssystem 10, 20; 110, welches bereits einen elektrisch ansteuerbaren Druckerzeuger 292, 190 besitzt, genutzt. Das Sekundärbremssystem 30 beinhaltet die für eine Redundanz nötige zweite elektronischen Steuer- und Regeleinheit (ECU) 9 und einen zweiten Druckerzeuger 4, so dass in der gesamten Bremsanlage zwei unabhängige ECUs und Druckerzeuger vorhanden sind.

Um bei einem Ausfall des "regulären" Primärbremssystems 10, 20; 110 die Bremsfunktion an das Sekundärbremssystem 30 zu übergeben, sind verschiedene Möglichkeiten denkbar.

Eine Möglichkeit wäre es, dass das Primärbremssystem einen Fehler selbst diagnostiziert und somit selbst feststellt, dass es nicht mehr in der Lage ist, die Bremsdruckanforderung umzusetzen. Diese selbst erkannte Fehlfunktion kann dann per BUS-Kommunikation oder ähnliches an die elektronische Steuer- und Regeleinheit des Sekundärbremssystems gemeldet werden. Entsprechend kann die Bremsdruckanforderung dann von dem Sekundärbremssystems ausgeführt werden.

Eine weitere Möglichkeit wäre es, dass das Primärbremssystem derart ausfällt, dass es komplett stromlos ist oder dass keine Funktion und BUS-Kommunikation mehr möglich ist. Dieser Zustand würde durch Überwachung der BUS-Kommunikation durch das Sekundärbremssystem erkannt und das Sekundärbremssystem könnte ebenfalls die Bremsfunktion übernehmen. Derartige BUS-Kommunikationsüberwachung und ggf. Reaktionen darauf sind an sich bekannt. Hierbei wäre es vorteilhaft, wenn die Kommunikationsverbindung redundant ausgeführt ist, da dann ein Ausfall einer der Kommunikationsverbindungen unterschieden werden könnte von einem Ausfall des Primärbremssystems.

Erfindungsgemäß überwacht das Sekundärbremssystem 30 das Primärbremssystem 10, 20; 110 anhand der Signale der Druckerfassungseinrichtung 22 oder 21 des Sekundärbremssystems 30 und der vorgegebenen Bremsdruckanforderung Psoll bezüglich der Funktionsfähigkeit des Primärbremssystems zum Aufbau eines Bremsdruckes entsprechend der vorgegebenen Bremsdruckanforderung. Es wird beispielsweise eine Drucküberwachung im Sekundärbremssystem 30 durchgeführt, die mit Hilfe des oder der in dem Sekundärbremssystem 30 vorhandenen Drucksensoren 22 oder 21 den Bremsdruck erfasst und beobachtet. Da das Sekundärbremssystems 30 dem Primärbremssystem 10, 20; 110 nachgeschaltet ist, kann es z.B. einen der erzeugten Bremsdrücke in den Vorderradbremskreisen des Primärbremssystems 10, 20; 110 erfassen, mit der Bremsdruckanforderung Psoll vergleichen und so das Primärbremssystem überwachen.

Als ergänzende Information wird vorteilhafterweise die Information vom Primärbremssystem 10, 20; 110 an das Sekundärbremssystems 30 geliefert, ob gerade eine Antiblockierregelung (ABS-Regelung) aktiv ist, da hierbei eine Unterschreitung des geforderten Bremsdrucks gewollt sein könnte.

Wenn keine ABS-Regelung des Primärbremssystems 10, 20; 110 aktiv ist, überwacht das Sekundärbremssystem 30 z.B. den eingestellten Radkreisdruck des Primärbremssystems. Hierzu kann das Sekundärbremssystem die Messwerte der eigenen Drucksensoren 22, 21 vergleichen mit der geforderten Bremsdruckanforderung Psoll. Die Bremsdruckanforderung Psoll ist auch im normalen Betrieb beiden Bremssystemen bekannt, somit kann das Sekundärbremssystem ständig die aktuelle Bremsdruckanforderung Psoll mit dem erfassten Druck oder den erfassten Drücken vergleichen und somit überwachen, ob das Primärbremssystem die Bremsdruckanforderung Psoll hinreichend umsetzt in den entsprechenden Bremsdruck.

So können auch unerkannte Fehlfunktionen des Primärbremssystems 10, 20; 110 vom Sekundärbremssystem 30 erkannt werden. Das Sekundärbremssystem 30 kann, falls notwendig, selbstständig die Bremsfunktion übernehmen und die aktuelle Bremsdruckanforderung Psoll mittels seiner Druckbereitstellungseinrichtung 4 umsetzen.

Durch das erfindungsgemäße Verfahren wird also eine höhere Sicherheit erreicht. Somit ist solch eine Bremsanlage bzw. solch ein Betriebsverfahren bestens für automatisiertes Fahren geeignet.

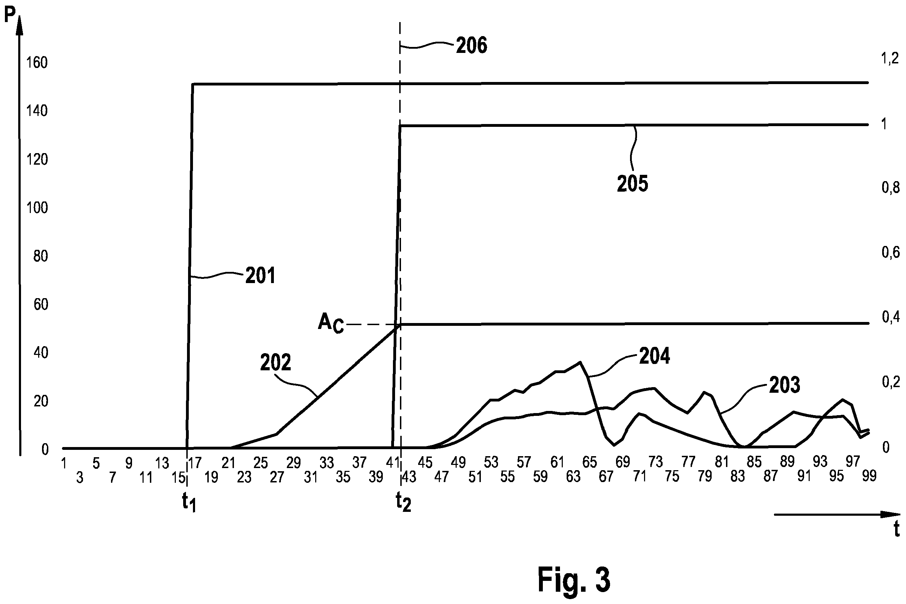

Zur Verdeutlichung sind in Fig. 3 zeitliche Verläufe verschiedener Größen während eines beispielsgemäßen Verfahrens dargestellt. Es handelt sich um einen beispielhaften Messschrieb. Als Funktion der Zeit t ist als Linie 201 die Bremsdruckanforderung Psoll dargestellt, als Linie 202 der Zählerstand C eines Fehlerzähler, als Linie 203 der Radbremsdruck der linken Vorderradbremse 151b, als Linie 204 der Radbremsdruck der rechten Vorderradbremse 151d und als Linie 205 ein Flag für die Übernahme durch das Sekundärbremssystem.

Zum Zeitpunkt t₁ springt die Bremsdruckanforderung 201 auf einen hohen Wert, das Primärbremssystem baut jedoch aufgrund einer Fehlfunktion keinen Radbremsdruck auf, was am Nicht-Ansteigen der Radbremsdrücke 203, 204 zu erkennen ist. Dies wird durch das Sekundärbremssystem anhand der Überwachung des Primärbremssystems erkannt. Wenn die Signale der Druckerfassungseinrichtung des Sekundärbremssystems nicht der Bremsdruckanforderung Psoll entsprechen, wird der Fehlerzähler (Linie 202) loopweise hochgezählt. Sobald zum Zeitpunkt t₂ der Zählerstand C des Fehlerzählers einen Schwellwert A_{C} erreicht hat (der Zeitpunkt t₂ ist durch die senkrechte gestrichelte Linie 206 markiert), entscheidet das Sekundärbremssystem die Bremsfunktion zu übernehmen und die Bremsdruckanforderung Psoll durch das Sekundärbremssystem umzusetzen. Anschließend wird der gewünschte Bremsdruck durch das Sekundärbremssystem aufgebaut, wie anhand der ansteigenden Radbremsdrücke 203, 204 zu erkennen ist. Bis zum Zeitpunkt t₂ ist das Primärbremssystem aktiv, danach ist das Sekundärbremssystem aktiv.

Ein Vorteil der Erfindung ist es, dass durch die beschriebene Überwachung auch ansonsten unerkannte Fehler vom Sekundärbremssystem erkannt bzw. abgedeckt werden. Durch die beschriebene Überwachung kann eine höhere Sicherheit erreicht werden, da sämtliche Fehlfunktionen, die dazu führen, dass eine Bremsdruckanforderung vom Primärbremssystem nicht wie gewünscht umgesetzt wird, von dem Sekundärbremssystem unabhängig erkannt und ausgeglichen werden.

## Patentansprüche

1. Verfahren zum Betrieb einer Bremsanlage eines Kraftfahrzeugs mit einem Primärbremssystem (10, 20; 110) mit
• einer ersten elektrisch steuerbaren Druckbereitstellungseinrichtung (292, 190) zur Bereitstellung eines Bremsdrucks zur Betätigung hydraulisch betätigbarer Radbremsen (151a, 151b, 151c, 151d),
• einer ersten elektronischen Steuer- und Regeleinheit (146) und
• einer ersten Druckerfassungseinrichtung (187), welche einen von dem Primärbremssystem bereitgestellten Bremsdruck misst,
sowie mit einem Sekundärbremssystem (30) mit
• einer zweiten elektrisch steuerbaren Druckbereitstellungseinrichtung (4) zur Bereitstellung eines Bremsdrucks zur Betätigung zumindest eines Teils der hydraulisch betätigbaren Radbremsen (151b, 151d),
• einer zweiten elektronischen Steuer- und Regeleinheit (9), und
• zumindest einer zweiten Druckerfassungseinrichtung (22, 21), deren Signale in der zweiten elektronischen Steuer- und Regeleinheit verarbeitet werden,
wobei das Sekundärbremssystem hydraulisch zwischen dem Primärbremssystem (10, 20; 110) und dem Teil der Radbremsen (151b, 151d) angeordnet ist,
**dadurch gekennzeichnet, dass** das Sekundärbremssystem (30) das Primärbremssystem (10, 20; 110) anhand der Signale der zweiten Druckerfassungseinrichtung (22, 21) und einer vorgegebenen Bremsdruckanforderung (Psoll) bezüglich der Funktionsfähigkeit des Primärbremssystems zum Aufbau eines Bremsdruckes entsprechend der vorgegebenen Bremsdruckanforderung überwacht.

2. Verfahren nach Anspruch 1, **dadurch gekennzeichnet, dass** zur Überwachung die Signale der zweiten Druckerfassungseinrichtung (22, 21) mit der vorgegebenen Bremsdruckanforderung (Psoll) verglichen werden.

3. Verfahren nach Anspruch 1 oder 2, **dadurch gekennzeichnet, dass** die Bremsdruckanforderung (Psoll) der ersten elektronischen Steuer- und Regeleinheit des Primärbremssystems und der zweiten elektronischen Steuer- und Regeleinheit des Sekundärbremssystems zugeführt wird oder vorliegt.

4. Verfahren nach einem der vorhergehenden Ansprüche, **dadurch gekennzeichnet, dass** die Bremsdruckanforderung (Psoll) von einem Steuergerät (410), insbesondere mit einer Autopilotfunktion, vorgegeben wird.

5. Verfahren nach Anspruch 4, **dadurch gekennzeichnet, dass** das Steuergerät (410) mit der zweiten elektronischen Steuer- und Regeleinheit (9) über eine zweite Signalverbindung (415), insbesondere einen zweiten Datenbus, verbunden ist, und dass das Steuergerät (410) mit der ersten elektronischen Steuer- und Regeleinheit (146) über eine erste Signalverbindung (420), insbesondere einen ersten Datenbus, verbunden ist.

6. Verfahren nach einem der vorhergehenden Ansprüche, **dadurch gekennzeichnet, dass** der zweiten elektronischen Steuer- und Regeleinheit (9) des Sekundärbremssystems (30) von der ersten elektronischen Steuer- und Regeleinheit (146) des Primärbremssystems (10,20; 110) ein Signal übermittelt wird, ob eine Bremsdruckregelfunktion, welche insbesondere eine Unterschreitung der vorgegebenen Bremsdruckanforderung (Psoll) erlaubt, im Primärbremssystem aktiv ist oder nicht.

7. Verfahren nach einem der vorhergehenden Ansprüche, **dadurch gekennzeichnet, dass** eine Betätigung des Teils der Radbremsen mittels der zweiten Druckbereitstellungseinrichtung (4) des Sekundärbremssystems (30) durchgeführt wird, wenn das Primärbremssystem (10, 20; 110) über einen vorgegebenen Zeitraum keinen Bremsdruck entsprechend der vorgegebenen Bremsdruckanforderung (Psoll) bereitstellt.

8. Verfahren nach einem der vorhergehenden Ansprüche, **dadurch gekennzeichnet, dass** die zweite Druckerfassungseinrichtung (22) einen Eingangsdruck des Sekundärbremssystems (30) erfasst.

9. Verfahren nach einem der vorhergehenden Ansprüche, **dadurch gekennzeichnet, dass** die zweite Druckerfassungseinrichtung (21) einen Ausgangsdruck des Sekundärbremssystems, insbesondere einen Radbremsdruck, erfasst.

10. Bremsanlage für ein Kraftfahrzeug umfassend ein Primärbremssystem (10, 20; 110) mit
• einer ersten elektrisch steuerbaren Druckbereitstellungseinrichtung (292, 190) zur Bereitstellung eines Bremsdrucks zur Betätigung hydraulisch betätigbarer Radbremsen (151a, 151b, 151c, 151d),
• einer ersten elektronischen Steuer- und Regeleinheit (146), und
• einer ersten Druckerfassungseinrichtung (187), welche einen von dem Primärbremssystem bereitgestellten Bremsdruck misst,
und ein Sekundärbremssystem (30) mit
• einer zweiten elektrisch steuerbaren Druckbereitstellungseinrichtung (4) zur Bereitstellung eines Bremsdrucks zur Betätigung zumindest eines Teils der hydraulisch betätigbaren Radbremsen (151b, 151d),
• einer zweiten elektronischen Steuer- und Regeleinheit (9), und
• zumindest einer zweiten Druckerfassungseinrichtung (22, 21), deren Signale in der zweiten elektronischen Steuer- und Regeleinheit (9) verarbeitet werden,
wobei das Sekundärbremssystem hydraulisch zwischen dem Primärbremssystem (10, 20; 110) und dem Teil der Radbremsen (151b, 151d) angeordnet ist,
**dadurch gekennzeichnet, dass** in der zweiten elektronischen Steuer- und Regeleinheit (9) eine Überwachung des Primärbremssystem bezüglich der Funktionsfähigkeit des Primärbremssystems zum Aufbau eines Bremsdruckes entsprechend einer vorgegebenen Bremsdruckanforderung durchgeführt wird, wobei die Überwachung anhand der Signale der zweiten Druckerfassungseinrichtung (22, 21) und der vorgegebenen Bremsdruckanforderung (Psoll) durchgeführt wird.

11. Bremsanlage nach Anspruch 10, **dadurch gekennzeichnet, dass** in der zweiten elektronischen Steuer- und Regeleinheit (9) ein Verfahren nach einem der Ansprüche 2 bis 9 durchgeführt wird.

## Claims

1. Method for operating a brake installation of a motor vehicle having a primary brake system (10, 20; 110) having
• a first electrically controllable pressure provision device (292, 190) for providing a brake pressure for actuating hydraulically actuatable wheel brakes (151a, 151b, 151c, 151d),
• a first electronic open-loop and closed-loop control unit (146), and
• a first pressure detection device (187), which measures a brake pressure provided by the primary brake system,
and having a secondary brake system (30) having
• a second electrically controllable pressure provision device (4) for providing a brake pressure for actuating at least a part of the hydraulically actuatable wheel brakes (151b, 151d),
• a second electronic open-loop and closed-loop control unit (9), and
• at least one second pressure detection device (22, 21), the signals of which are processed in the second electronic open-loop and closed-loop control unit,
wherein the secondary brake system is arranged hydraulically between the primary brake system (10, 20; 110) and the part of the wheel brakes (151b, 151d),
**characterized in that**
the secondary brake system (30) monitors the primary brake system (10, 20; 110) on the basis of the signals of the second pressure detection device (22, 21) and on the basis of a predefined brake pressure demand (Psoll) with regard to the functional capability of the primary brake system to build up a brake pressure corresponding to the predefined brake pressure demand.

2. Method according to Claim 1, **characterized in that**, for the monitoring, the signals of the second pressure detection device (22, 21) are compared with the predefined brake pressure demand (Psoll).

3. Method according to Claim 1 or 2, **characterized in that** the brake pressure demand (Psoll) is supplied or available to the first electronic open-loop and closed-loop control unit of the primary brake system and to the second electronic open-loop and closed-loop control unit of the secondary brake system.

4. Method according to one of the preceding claims, **characterized in that** the brake pressure demand (Psoll) is predefined by a control device (410), in particular with an autopilot function.

5. Method according to Claim 4, **characterized in that** the control device (410) is connected to the second electronic open-loop and closed-loop control unit (9) via a second signal connection (415), in particular a second data bus, and **in that** the control device (410) is connected to the first electronic open-loop and closed-loop control unit (146) via a first signal connection (420), in particular a first data bus.

6. Method according to one of the preceding claims, **characterized in that**, to the second electronic open-loop and closed-loop control unit (9) of the secondary brake system (30), there is transmitted from the first electronic open-loop and closed-loop control unit (146) of the primary brake system (10, 20; 110) a signal regarding whether or not a brake pressure control function, which in particular permits an undershooting of the predefined brake pressure demand (Psoll), in the primary brake system is active.

7. Method according to one of the preceding claims, **characterized in that** an actuation of the part of the wheel brakes is performed by means of the second pressure provision device (4) of the secondary brake system (30) if the primary brake system (10, 20; 110), over a predefined time period, does not provide a brake pressure corresponding to the predefined brake pressure demand (Psoll).

8. Method according to one of the preceding claims, **characterized in that** the second pressure detection device (22) detects an inlet pressure of the secondary brake system (30).

9. Method according to one of the preceding claims, **characterized in that** the second pressure detection device (21) detects an outlet pressure of the secondary brake system, in particular a wheel brake pressure.

10. Brake installation for a motor vehicle comprising a primary brake system (10, 20; 110) having
• a first electrically controllable pressure provision device (292, 190) for providing a brake pressure for actuating hydraulically actuatable wheel brakes (151a, 151b, 151c, 151d),
• a first electronic open-loop and closed-loop control unit (146), and
• a first pressure detection device (187), which measures a brake pressure provided by the primary brake system,
and a secondary brake system (30) having
• a second electrically controllable pressure provision device (4) for providing a brake pressure for actuating at least a part of the hydraulically actuatable wheel brakes (151b, 151d),
• a second electronic open-loop and closed-loop control unit (9), and
• at least one second pressure detection device (22, 21), the signals of which are processed in the second electronic open-loop and closed-loop control unit (9),
wherein the secondary brake system is arranged hydraulically between the primary brake system (10, 20; 110) and the part of the wheel brakes (151b, 151d),
**characterized in that**, in the second electronic open-loop and closed-loop control unit (9), monitoring of the primary brake system is performed with regard to the functional capability of the primary brake system to build up a brake pressure corresponding to a predefined brake pressure demand, wherein the monitoring is performed on the basis of the signals of the second pressure detection device (22, 21) and on the basis of the predefined brake pressure demand (Psoll).

11. Brake installation according to Claim 10, **characterized in that** a method according to one of Claims 2 to 9 is performed in the second electronic open-loop and closed-loop control unit (9).

## Revendications

1. Procédé pour faire fonctionner un équipement de freinage d'un véhicule automobile ayant un système de freinage primaire (10, 20 ; 110), comprenant
* un premier dispositif de fourniture de pression (292, 190) pouvant être commandé électriquement et destiné à fournir une pression de freinage servant à actionner des freins de roue (151a, 151b, 151c, 151d) actionnables hydrauliquement,
* une première unité de commande et de régulation (146) électronique et
* un premier dispositif de détection de pression (187) qui mesure une pression de freinage fournie par le système de freinage primaire,
et ayant également un système de freinage secondaire (30) comprenant
* un deuxième dispositif de fourniture de pression (4) pouvant être commandé électriquement et destiné à fournir une pression de freinage servant à actionner au moins une partie des freins de roue (151b, 151d) actionnables hydrauliquement,
* une deuxième unité de commande et de régulation (9) électronique et
* au moins un deuxième dispositif de détection de pression (22, 21) dont les signaux sont traités dans la deuxième unité de commande et de régulation électronique, le système de freinage secondaire étant disposé hydrauliquement entre le système de freinage primaire (10, 20 ; 110) et la partie des freins de roue (151b, 151d),
**caractérisé en ce que**
le système de freinage secondaire (30) surveille le système de freinage primaire (10, 20 ; 110) à l'aide des signaux du deuxième dispositif de détection de pression (22, 21) et d'une consigne de pression de freinage (Psoll) prédéfinie concernant l'aptitude fonctionnelle du système de freinage primaire à établir une pression de freinage conformément à la consigne de pression de freinage prédéfinie.

2. Procédé selon la revendication 1, **caractérisé en ce que** pour effectuer la surveillance, les signaux du deuxième dispositif de détection de pression (22, 21) sont comparés avec la consigne de pression de freinage (Psoll) prédéfinie.

3. Procédé selon la revendication 1 ou 2, **caractérisé en ce que** la consigne de pression de freinage (Psoll) est acheminée ou est présentée à la première unité de commande et de régulation électronique du système de freinage primaire et à la deuxième unité de commande et de régulation électronique du système de freinage secondaire.

4. Procédé selon l'une des revendications précédentes, **caractérisé en ce que** la consigne de pression de freinage (Psoll) est prédéfinie par un contrôleur (410), ayant notamment une fonction de pilote automatique.

5. Procédé selon la revendication 4, **caractérisé en ce que** le contrôleur (410) est relié à la deuxième unité de commande et de régulation (9) électronique par le biais d'une deuxième liaison de signal (415), notamment d'un deuxième bus de données, et **en ce que** le contrôleur (410) est relié à la première unité de commande et de régulation (146) électronique par le biais d'une première liaison de signal (420), notamment d'un premier bus de données.

6. Procédé selon l'une des revendications précédentes, **caractérisé en ce qu'**un signal est communiqué à la deuxième unité de commande et de régulation (9) électronique du système de freinage secondaire (30) par la première unité de commande et de régulation (146) électronique du système de freinage primaire (10, 20 ; 110) pour indiquer si une fonction de régulation de la pression de freinage, qui autorise notamment un franchissement vers le bas de la consigne de pression de freinage (Psoll) prédéfinie, est active ou non dans le système de freinage primaire.

7. Procédé selon l'une des revendications précédentes, **caractérisé en ce qu'**un actionnement de la partie des freins de roue au moyen du deuxième dispositif de fourniture de pression (4) du système de freinage secondaire (30) est effectué lorsque le système de freinage primaire (10, 20 ; 110) ne fournit aucune pression de freinage correspondant à la consigne de pression de freinage (Psoll) prédéfinie pendant une période prédéfinie.

8. Procédé selon l'une des revendications précédentes, **caractérisé en ce que** le deuxième dispositif de détection de pression (22) détecte une pression d'entrée du système de freinage secondaire (30).

9. Procédé selon l'une des revendications précédentes, **caractérisé en ce que** le deuxième dispositif de détection de pression (21) détecte une pression de sortie du système de freinage secondaire, notamment une pression de frein de roue.

10. Équipement de freinage pour un véhicule automobile comportant un système de freinage primaire (10, 20 ; 110), comprenant
* un premier dispositif de fourniture de pression (292, 190) pouvant être commandé électriquement et destiné à fournir une pression de freinage servant à actionner des freins de roue (151a, 151b, 151c, 151d) actionnables hydrauliquement,
* une première unité de commande et de régulation (146) électronique et
* un premier dispositif de détection de pression (187) qui mesure une pression de freinage fournie par le système de freinage primaire,
et un système de freinage secondaire (30) comprenant
* un deuxième dispositif de fourniture de pression (4) pouvant être commandé électriquement et destiné à fournir une pression de freinage servant à actionner au moins une partie des freins de roue (151b, 151d) actionnables hydrauliquement,
* une deuxième unité de commande et de régulation (9) électronique et
* au moins un deuxième dispositif de détection de pression (22, 21) dont les signaux sont traités dans la deuxième unité de commande et de régulation (9) électronique,
le système de freinage secondaire étant disposé hydrauliquement entre le système de freinage primaire (10, 20 ; 110) et la partie des freins de roue (151b, 151d),
**caractérisé en ce qu'**une surveillance du système de freinage primaire concernant l'aptitude fonctionnelle du système de freinage primaire à établir une pression de freinage conformément à une consigne de pression de freinage prédéfinie est effectuée dans la deuxième unité de commande et de régulation (9) électronique, la surveillance étant effectuée à l'aide des signaux du deuxième dispositif de détection de pression (22, 21) et de la consigne de pression de freinage (Psoll) prédéfinie.

11. Équipement de freinage selon la revendication 10, **caractérisé en ce qu'**un procédé selon l'une des revendications 2 à 9 est mis en œuvre dans la deuxième unité de commande et de régulation (9) électronique.
